# EUROPEAN PATENT APPLICATION

(11) **EP 4 664 834 A1**
(43) Date of publication of application: **17.12.2025**
(21) Application number: 23920755.8
(22) Date of filing: 27.10.2023
(51) Int. Cl.: H04L 12/46, H04L 41/12

(54) **METHOD AND APPARATUS FOR CLUSTER COMMUNICATION, STORAGE MEDIUM, AND ELECTRONIC DEVICE**

(30) Priority: 07.02.2023 CN 202310119279
(71) Applicant: Jingdong Technology Information Technology Co., Ltd., Beijing 100176 (CN)
(72) Inventor: WU, Feihu, Beijing 100176 (CN)
(74) Representative: Böckmann genannt Dallmeyer, Georg Nikolas
(86) International application number: PCT/CN2023/127285
(87) International publication number: WO 2024/164563

(57) **Abstract**

The present disclosure provides a method and apparatus for cluster communication, an electronic device, and a storage medium. The method comprises: according to a first private cloud network where a client node is located, determining an extranet IP address of a to-be-configured service node; according to a second private cloud network where a management node is located, determining an intranet IP address of the to-be-configured service node; on the basis of the extranet IP address and the intranet IP address, generating configuration information; according to the configuration information, binding the to-be-configured service node respectively with the extranet IP address in the first private cloud network and the intranet IP address in the second private cloud network so that the to-be-configured service node communicates with the client node through the first private cloud network and communicates with the management node through the second private cloud network.

## Description

### CROSS-REFERENCE TO RELATED APPLICATIONS

This disclosure claims priority to Chinese Patent Application No. 202310119279.4, which was filed on February 7, 2023, entitled "METHOD AND APPARATUS FOR CLUSTER COMMUNICATION, STORAGE MEDIUM, AND ELECTRONIC DEVICE", and the content of which is hereby incorporated by reference in its entirety.

### TECHNICAL FIELD

The present disclosure relates to the field of computer technology, and more particularly, to a method and apparatus for cluster communication, a storage medium, and an electronic device.

### BACKGROUND

With the development of computer technology and network technology, and the widespread use of cloud technology, users are paying more and more attention to the security and privacy of data.

In related technologies, multiple virtual private clouds (VPCs) can be created to isolate components, and multiple VPCs cannot communicate with each other, so as to ensure data security. Then, in the related technology, if the service node is connected to a single VPC in a cluster (such as a redis cluster), it will affect the data communication between the service node, the client node and the management node.

### SUMMARY

The object of the present disclosure is to provide a method and apparatus for cluster communication, an electronic device, and a storage medium.

Other characteristics and advantages of the present disclosure may become apparent from the following detailed description, or in part, may be learned by practice of the present disclosure.

According to one aspect of the present disclosure, a method for cluster communication is provided. The cluster includes a client node, multiple service nodes and a management node. The method for cluster communication comprises: according to a first private cloud network where a client node is located, determining an extranet IP address of a to-be-configured service node of the multiple service nodes; according to a second private cloud network where a management node is located, determining an intranet IP address of the to-be-configured service node; generating configuration information based on the extranet IP address and the intranet IP address; according to the configuration information, binding the to-be-configured service node respectively with the extranet IP address in the first private cloud network and the intranet IP address in the second private cloud network, so that the to-be-configured service node communicates with the client node through the first private cloud network and communicates with the management node through the second private cloud network.

In one embodiment of the present disclosure, the method for cluster communication further comprises: determining the intranet IP address bound to each service node and management node in the cluster in the second private cloud network, and determining a port number of each service node; creating an intranet socket based on the intranet IP address and the port number; and using the intranet socket for listening to achieve internal communication within the cluster.

In one embodiment of the present disclosure, the method for cluster communication further comprises: determining the extranet IP address bound to each service node and the client node in the cluster in the first private cloud network, and determining the port number of each service node; creating an extranet socket based on the extranet IP address and the port number; and using the extranet socket for listening to achieve external communication between the service nodes and client nodes in the cluster.

In one embodiment of the present disclosure, the method for cluster communication further comprises: when a first service node of the multiple service nodes sends a message to other service nodes in the cluster, constructing a message header of the message according to the first intranet IP address and the first extranet IP address of the first service node.

In one embodiment of the present disclosure, the method for cluster communication further comprises: performing cluster topology management based on the extranet IP address and the intranet IP address bound to each of the multiple service nodes.

In one embodiment of the present disclosure, the cluster topology management is performed based on the extranet IP address and the intranet IP address bound to each of the multiple service nodes, comprising: when a node adding instruction for a newly added service node is initiated to the second service node of the multiple service nodes through the management node, parsing the node adding instruction through the second service node to obtain the communication address information of the newly added service node; generating a propagation message through the second service node based on the communication address information of the newly added service node, and propagating the propagation message to other service nodes of the multiple service nodes.

In one embodiment of the present disclosure, the cluster topology management is performed based on the extranet IP address and the intranet IP address bound to each of the multiple service nodes, comprising: when a third service node of the multiple service nodes monitors that the communication address information of a fourth service node communicating with it is updated, determining a to-be-updated topology structure of the cluster through the third service node, and propagating the to-be-updated topology structure to other service nodes of the multiple service nodes.

In one embodiment of the present disclosure, the method for cluster communication also comprises: persisting the communication address information of the newly added service node or the to-be-updated topology structure of the cluster.

In one embodiment of the present disclosure, the cluster topology management is performed based on the extranet IP address and the intranet IP address bound to each of the multiple service nodes, comprising: when an operation and maintenance instruction is sent to a fifth service node of the multiple service nodes through the client node, returning the extranet IP address of the fifth service node to the client node.

In one embodiment of the present disclosure, the operation and maintenance instruction includes a topology structure acquisition instruction; wherein the method for cluster communication further includes: when a return value of the topology structure acquisition instruction cannot be obtained from the fifth service node, re-initiating the topology structure acquisition instruction to a sixth service node of the multiple service nodes to receive the topology structure of the cluster returned by the sixth node.

In one embodiment of the present disclosure, the method for cluster communication further comprises: setting a field value of the dual network tag field to an open state.

According to another aspect of the present disclosure, an apparatus for cluster communication is provided, the cluster including a client node, multiple service nodes and a management node, the apparatus for cluster communication comprising: an address determination module for determining an extranet IP address of a to-be-configured service node of the multiple service nodes according to a first private cloud network where the client node is located; the address determination module further for determining an intranet IP address of the to-be-configured service node according to a second private cloud network where the management node is located; a configuration generation module for generating configuration information based on the extranet IP address and the intranet IP address; a binding module for binding the to-be-configured service node to the extranet IP address in the first private cloud network and the intranet IP address in the second private cloud network according to the configuration information, so that the to-be-configured service node communicates with the client node through the first private cloud network and communicates with the management node through the second private cloud network.

According to another aspect of the present disclosure, a computer-readable storage medium having a computer program stored thereon, which, when executed by a processor, implements the above-mentioned method for cluster communication.

According to another aspect of the present disclosure, an electronic device is provided, comprising: a processor; and a storage means for storing executable instructions of the processor; wherein the processor is configured to execute the above-mentioned method for cluster communication by executing the executable instructions.

The method for cluster communication provided by the embodiments of the present disclosure can enable the service node in the cluster to be bound to the first private cloud network where the client is located and the second private cloud network where the management node is located at the same time, so that the service node can communicate with the client node through the first private cloud network on the one hand, and communicate with the management node through the second private cloud network on the other hand, which can not only ensure the normal communication between the client node, multiple service nodes and management nodes in the same cluster, but also realize the security and privacy of data isolation in the communication.

It should be understood that the above general description and the detailed description below are only exemplary and explanatory, and cannot limit the present disclosure.

### BRIEF DESCRIPTION OF DRAWINGS

The following figures are incorporated into the specification and form part of the specification, showing embodiments consistent with the present disclosure, and taken in conjunction with the specification to explain the principles of the present disclosure. Obviously, the figures described below are only some embodiments of the present disclosure, so those of ordinary skill in the art may obtain other figures based on these figures without taking inventive efforts.
FIG.1 shows a schematic diagram of an exemplary system architecture to which the method for cluster communication of an embodiment of the present disclosure can be applied.
FIG.2 shows a flowchart of the method for cluster communication of an embodiment of the present disclosure.
FIG.3 shows a schematic diagram of cluster communication in the method for cluster communication of an embodiment of the present disclosure.
FIG.4 shows a flowchart of newly adding a service node in the method for cluster communication of an embodiment of the present disclosure.
FIG.5 shows a flowchart of updating the communication address of a service node in the method for cluster communication of an embodiment of the present disclosure.
FIG.6 shows a flowchart of processing operation and maintenance instructions by a service node in the method for cluster communication of an embodiment of the present disclosure.
FIG.7 shows a block diagram of an apparatus for cluster communication of an embodiment of the present disclosure.
FIG.8 shows a structural block diagram of a computer device for cluster communication of an embodiment of the present disclosure.

### DETAILED DESCRIPTION

Exemplary embodiments will now be described more fully with reference to the accompanying drawings. Exemplary embodiments, may, however, be embodied in many different forms and should not be construed as being limited to the embodiments set forth herein; rather, these exemplary embodiments are provided so that this disclosure will be thorough and complete, and will fully convey the scope of exemplary embodiments to those of ordinary skill in the art. The described features, structures, or characteristics may be combined in any suitable manner in one or more implementations.

In addition, the accompanying drawings are merely schematic illustrations of the present disclosure and are not necessarily drawn to scale. The like reference numerals in the drawings refer to the like or similar parts, and thus their repeated description will be omitted. Some of the block diagrams shown in the drawings are functional entities and do not necessarily correspond to physically or logically independent entities. These functional entities may be implemented in the form of software, or in one or more hardware modules or integrated circuits, or in different networks and/or processor devices and/or microcontroller devices.

In addition, the terms "first" and "second" are intended only for purposes of description and cannot be understood as indicating or implying relative importance or implicitly indicating the number of technical features indicated. Thus, the features defined with "first" and "second" may explicitly or implicitly include one or more of the features. In the description of the present disclosure, "multiple" means at least two, such as two, three, etc., unless clearly and specifically defined otherwise.

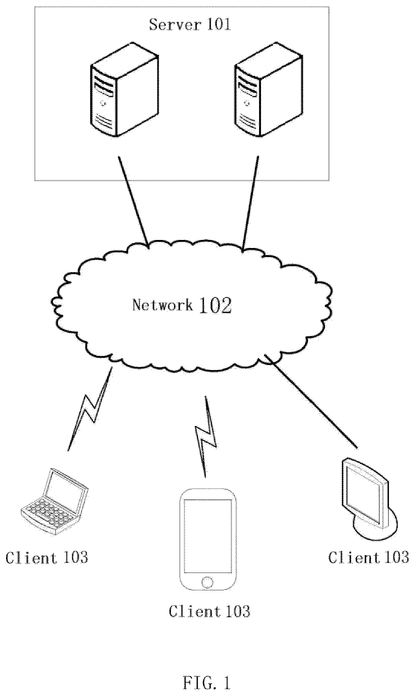

FIG.1 shows a schematic diagram of an exemplary system architecture to which the method for cluster communication of the embodiment of the present disclosure can be applied.

As shown in FIG.1, the system architecture may include a server 101, a network 102, and a client 103. The network 102 is used to provide a medium for a communication link between the client 103 and the server 101. The network 102 may include various connection types, such as wired, wireless communication links or optical fiber cables, etc.

In an exemplary embodiment, the client 103 for data transmission with the server 101 may include, but is not limited to, electronic devices such as smart phones, desktop computers, tablet computers, laptops, smart speakers, digital assistants, AR (Augmented Reality) devices, VR (Virtual Reality) devices, smart wearable devices, etc. Optionally, the operating system running on the electronic device may include, but is not limited to, Android systems, IOS systems, Linux systems, Windows systems, etc.

Server 101 can be an independent physical server, or a server cluster or distributed system composed of multiple physical servers, or a cloud server that provides basic cloud computing services such as cloud services, cloud databases, cloud computing, cloud functions, cloud storage, network services, cloud communications, middleware services, domain name services, security services, CDN (Content Delivery Network), and big data and artificial intelligence platforms. In some practical applications, server 101 can also be a server of a network platform, which can be, for example, a trading platform, a live broadcast platform, a social platform, or a music platform, etc., which is not limited in the embodiments of the present disclosure. Wherein, the server can be a single server or a cluster formed by multiple servers, and the specific architecture of the server is not limited in the present disclosure.

In an exemplary embodiment, the process of server 101 for implementing the method for cluster communication may be: server 101 determining the extranet IP address of the to-be-configured service node of the multiple service nodes according to the first private cloud network where the client node is located; server 101 determining the intranet IP address of the to-be-configured service node according to the second private cloud network where the management node is located; server 101 generating configuration information based on the extranet IP address and the intranet IP address; server 101 binding the to-be-configured service node respectively with the extranet IP address in the first private cloud network and the intranet IP address in the second private cloud network according to the configuration information, so that the to-be-configured service node communicates with the client node through the first private cloud network and communicates with the management node through the second private cloud network.

In an exemplary embodiment, the client node of the cluster in the embodiment of the present disclosure may be present on the client 103, and multiple service nodes and management nodes may be distributed on the server 101. The network 102 may include multiple networks, which may include the first private cloud network and the second private cloud network mentioned in the embodiments of the present disclosure, wherein the first private cloud network and the second private cloud network may be different VPCs (Virtual Private Cloud).

In addition, it should be noted that FIG. 1 illustrates only an application environment of the method for cluster communication provided by the present disclosure. The number of servers 101, networks 102 and clients 103 in FIG. 1 is provided only for illustration, and any number of clients, networks and servers may be provided according to actual needs.

In order to enable those of ordinary skill in the art to better understand the technical solution of the present disclosure, the various steps of the method for cluster communication in the exemplary embodiment of the present disclosure will be described in more detail below in combination with the accompanying drawings and embodiments.

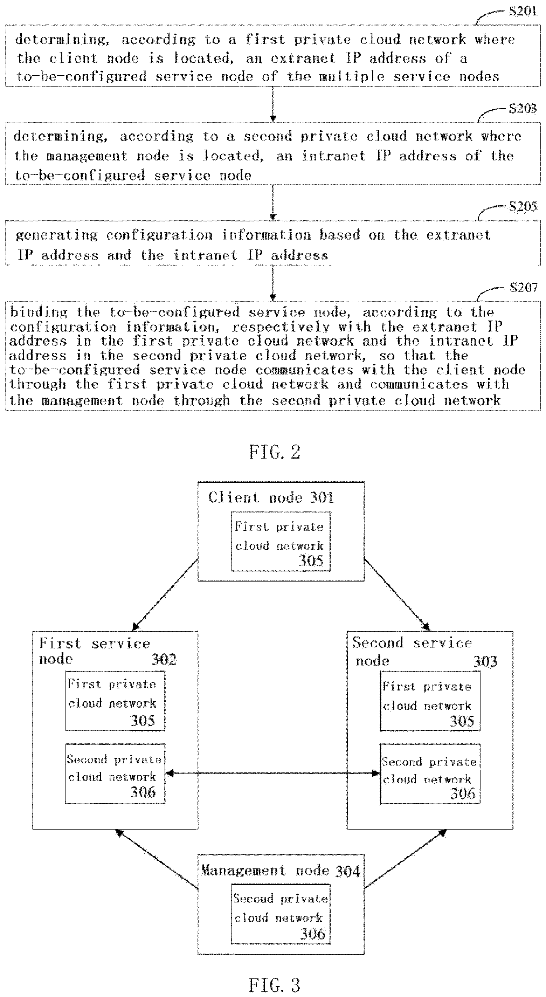

FIG.2 shows a flowchart of a method for cluster communication according to an embodiment of the present disclosure. The method provided by the embodiment of the present disclosure can be executed by the server 101 or the client 103 as shown in FIG.1, but the present disclosure is not limited thereto.

In the following example description, the server 101 is used as the execution subject for example description.

As illustrated in FIG.2, in the method for cluster communication provided by the embodiment of the present disclosure, the cluster may include a client node, multiple service nodes and a management node, and the cluster may be a Redis cluster; the method for cluster communication may include the following steps.

Step S201, determining the extranet IP address of the to-be-configured service node of the multiple service nodes according to the first private cloud network where the client node is located.

In this step, if the client node selects the first private cloud network earlier than the to-be-configured service node, the first private cloud network where the client node is located can be determined first, and then the extranet IP address can be selected for the to-be-configured service node based on the network segment information corresponding to the first private cloud network for allocation.

In some practical applications, the to-be-configured service node can also first determine a first private cloud network, determine an extranet IP address from the network segment information corresponding to the first private cloud network for configuration, and then connect the client node to the first private cloud network.

Step S203, determining the intranet IP address of the to-be-configured service node according to the second private cloud network where the management node is located.

In this step, the management node can be a node that manages the Redis cluster, and in some practical applications it can be a redis operator node, a manager node, etc. The management node and multiple service nodes can belong to the second private cloud network provided by the enterprise platform.

The execution order of step S201 and step S203 can be in no particular order. In some embodiments, before executing step S201 or step S203, the method for cluster communication can also include: setting the field value of the dual network tag field to an open state.

The dual network tag field can be regarded as a field used to indicate whether the current mode is dual network mode or single network mode. For example, if the field value is 1, it indicates that the current mode is dual network mode, and if the field value is 0, it indicates that the current mode is single network mode; wherein, the dual network mode is a mode applicable to the method for cluster communication provided by the present disclosure. Specifically, in the dual network mode, two IP addresses can be seen in the container where the redis-server (service node) is located. These two IP addresses belong to the User VPC (first private cloud network) and the Server VPC (second private cloud network) respectively.

Step S205, generating configuration information based on the extranet IP address and the intranet IP address.

In some embodiments, step S205 may further include: obtaining the binding bind configuration item of the to-be-configured service node; adding the extranet IP address and the intranet IP address to the bind configuration item.

Wherein, the configuration instruction can be generated in the form of a Redis command line as the configuration information, or the configuration file can be found and the configuration can be implemented by modifying the configuration file.

In some practical applications, the information of the extranet IP address can be additionally configured, and the first ip in the native bind configuration item is assigned to the intranet IP address, so that when the two IP addresses connected to the service node are configured, the native bind configuration item of redis can also be compatible.

Step S207, according to the configuration information, the to-be-configured service node is respectively bound to the extranet IP address in the first private cloud network and the intranet IP address in the second private cloud network, so that the to-be-configured service node communicates with the client node through the first private cloud network, and the to-be-configured service node communicates with the management node through the second private cloud network.

Specifically, the IP addresses belonging to two private cloud networks (i.e., the first private cloud network and the second private cloud network) can be stored in the container of the service node, so that the container where the service node is located is bound to the IPs of the two private cloud networks at the same time.

It can be seen that through the method for cluster communication provided by the present disclosure, the service node in the cluster can be bound to the first private cloud network where the client is located and the second private cloud network where the management node is located at the same time, so that the service node can communicate with the client node through the first private cloud network on the one hand, and communicate with the management node through the second private cloud network on the other hand, which can not only ensure the normal communication between the client node, multiple service nodes and management nodes in the same cluster, but also achieve the security and privacy of data isolation in communication.

FIG.3 shows a schematic diagram of cluster communication in a method for cluster communication in an embodiment of the present disclosure. As shown in FIG.3, the method includes a client node 301, a first service node 302, a second service node 303, a management node 304, a first private cloud network 305, and a second private cloud network 306.

Wherein, the first service node 302 (the second service node 303 is similar) can be bound to the first private cloud network 305 and the second private cloud network 306 at the same time, the first service node 302 and the client node 301 can communicate through the first private cloud network 305, the first service node 302 and the management node 303 can communicate through the second private cloud network 306, and the first service node 302 and the second service node 303 can communicate through the second private cloud network 306 based on the Gossip protocol.

In some embodiments, the method for cluster communication also comprises: determining the intranet IP address bound to each service node and management node in the cluster in the second private cloud network, and determining a port number of each service node; creating an intranet socket based on the intranet IP address and the port number; and using the intranet socket for listening to achieve internal communication of the cluster.

Wherein, the intranet socket can be considered as a socket created based on the intranet IP address and port information of all service nodes. Using the intranet socket for listening can be used to realize communication between service nodes, that is, to realize communication within the cluster.

In some practical applications, assuming that the cluster is a Redis cluster, the service node can be a redis-server, and the communication between service nodes can maintain the metadata information of the entire redis cluster through the Gossip protocol.

In some embodiments, the method for cluster communication also comprises: determining the extranet IP address bound to each service node and client node in the cluster in the first private cloud network, and determining the port number of each service node; creating an extranet socket according to the extranet IP address and the port number; using the extranet socket for listening to realize external communication between service nodes and client nodes in the cluster.

Wherein, the extranet socket can be considered as a socket created based on the extranet IP address and port information of all service nodes. Using the extranet socket for listening can be used to realize communication between the service node and the client node, that is, to realize communication outside the cluster.

In some embodiments, the method for cluster communication also comprises: when the first service node of the multiple service nodes sends a message to other service nodes in the cluster, constructing the message header of the message according to the first intranet IP address and the first extranet IP address of the first service node.

Wherein, the "first service node" can be considered as any node in the cluster that needs to send a message to other service nodes.

Further, in some embodiments, the step of constructing a message header of a message according to the first intranet IP address and the first extranet IP address of the first service node may include: determining the value of the my_ip field of the node in the message header of the message according to the first intranet IP address, and adding the extranet ip field and the value of the extranet ip field to the message header according to the first extranet IP address; constructing the message header according to the value of the my_ip field and the value of the extranet ip field.

In some other embodiments, the step of constructing a message header of a message according to the first intranet IP address and the first extranet IP address of the first service node may also include: determining the value of the my_ip field of the node in the message header of the message according to the first extranet IP address, and adding the intranet ip field and the value of the intranet ip field to the message header according to the first intranet IP address; constructing the message header according to the value of the my_ip field and the value of the intranet ip field.

In this embodiment, the my_ip field in the original message header can be reused, and if there is a reserved field in the original message header, the reserved field can also be reused as a newly added extranet ip field or intranet ip field.

In some practical applications, the node management structure of the service node can additionally store the extranet IP address, and the original ip field can be used to store the intranet IP address.

In some embodiments, the method for cluster communication also comprises: performing cluster topology management based on the extranet IP address and intranet IP address bound to each service node of the multiple service nodes.

In the method for cluster communication provided by the present disclosure, since the service node is bound to two private cloud networks, it is necessary to provide a solution for the service node cluster topology management.

In some embodiments, cluster topology management is performed based on the extranet IP address and the intranet IP address bound to each service node of multiple service nodes, comprising: when a node adding instruction for a newly added service node is initiated to the second service node of the multiple service nodes through the management node, parsing the node adding instruction by the second service node to obtain the communication address information of the newly added service node; generating a propagation message by the second service node based on the communication address information of the newly added service node, and propagating the propagation message to other service nodes of the multiple service nodes.

Wherein, the "second service node" can be considered as any node in the cluster that has received the node adding instruction, and the second service node can be a node connected to the client node; the node adding instruction can be, for example, a cluster meet instruction. The second service node can add the communication address information of the newly added service node to the memory of the node (i.e., the second service node) and propagate it to the entire cluster through the Gossip protocol. This embodiment provides a cluster topology management solution when a new node appears in the cluster.

In some embodiments, cluster topology management is performed based on the extranet IP address and the intranet IP address bound to each service node of the multiple service nodes, comprising: when a third service node of the multiple service nodes monitors that the communication address information of the fourth service node communicating with it is updated, determining the to-be-updated topology structure of the cluster by the third service node, and propagating the to-be-updated topology structure to other service nodes of the multiple service nodes.

Wherein, the "third service node" can be considered as any node in the cluster that monitors a change in the communication address information of the node, and the "fourth service node" can be considered as any node in the cluster that has a change in the communication address information. This embodiment provides a cluster topology management solution when the communication address of a service node in a cluster changes.

In some practical applications, each service node stores the communication address information of all nodes in the cluster (including extranet IP addresses and intranet IP addresses). When two service nodes communicate, the service node receiving the message (such as the third service node) can determine the current communication address information of the other node (such as the fourth service node) according to the message header in the message, and then compare the stored communication address information of the other node with the current communication address information of the other node. If the third service node finds that the two are inconsistent, it can be considered that the communication address information of the fourth service node communicating with it has been updated. At this time, the new topology structure in the cluster can be determined and the new topology structure can be propagated to the entire cluster.

In some embodiments, after the communication address information of the service node is changed, it can be considered that the topology structure of the cluster has been updated, and it needs to be persisted in time to ensure data accuracy. Based on this, the method for cluster communication also includes: persisting the communication address information of the newly added service node or the to-be-updated topology structure of the cluster.

In some practical applications, the communication address information of the newly added service node or the to-be-updated topology structure of the cluster can be persisted to the node configuration file.

Wherein, the node configuration file can be, for example, a Node conf file. In some practical applications, if a cluster needs to be restarted, the communication address information of each node in the cluster can be determined by using a timely updated node configuration file.

For example, the intranet IP address in the communication address information can be represented by inter-ip, and the extranet IP address can be represented by outer-ip. The communication address information can be stored in the node configuration file in the form of "outer-ip:port@inter-ip:cport". In the cluster startup stage, the data in the node configuration file can be loaded into the memory in the form of "outer-ip:port@inter-ip:cport" to achieve normal communication after the cluster restarts.

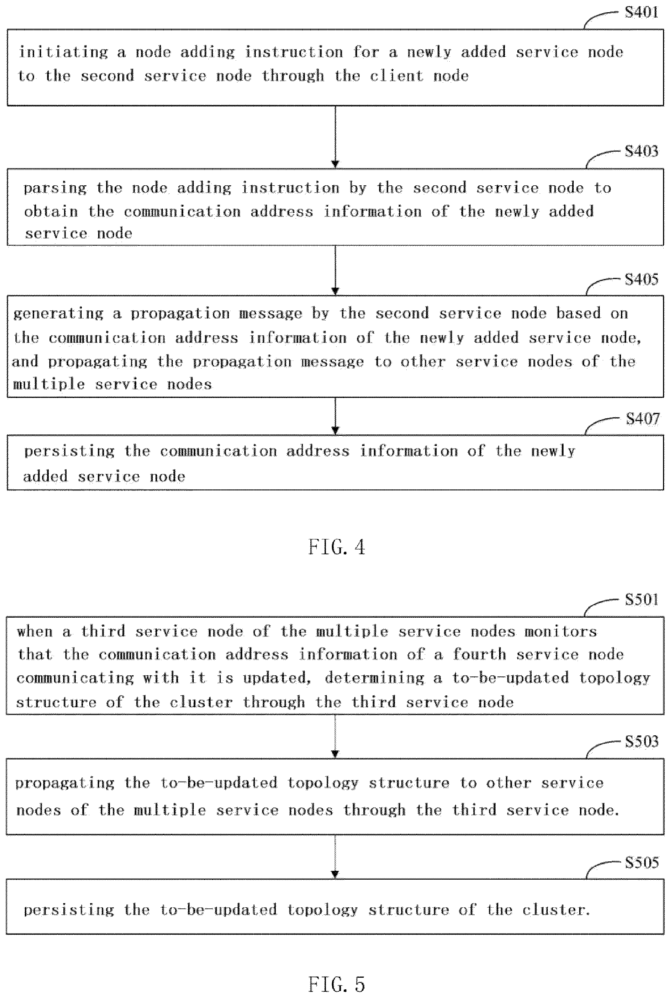

FIG. 4 shows a flowchart of newly adding a service node in a method for cluster communication in an embodiment of the present disclosure, as shown in FIG. 4, including the following steps.

Step S401, initiating a node adding instruction for the newly added service node to the second service node through the client node.

Step S403, parsing the node adding instruction through the second service node to obtain the communication address information of the newly added service node.

Step S405, generating a propagation message based on the communication address information of the newly added service node through the second service node, and propagating the propagation message to other service nodes of the multiple service nodes.

In this step, the generated propagation message may include the topology structure of the cluster updated based on the communication address information of the newly added service node, or may only include the communication address information of the newly added service node. Through this step, the communication address information of the newly added service node can be propagated to other service nodes using the second service node; wherein, the communication address information of the newly added service node may include, for example, the newly added extranet IP address and the newly added intranet IP address of the newly added service node.

Step S407, persisting the communication address information of the newly added service node.

Wherein, the communication address information of the newly added service node may be directly persisted, or the topology structure of the cluster updated based on the communication address information of the newly added service node may be persisted; specifically, the communication address information of the newly added service node or the updated topology structure of the cluster may be persisted to the node configuration file.

FIG.5 shows a flowchart of updating the communication address of a service node in a method for cluster communication in an embodiment of the present disclosure, as shown in FIG.5, including the following steps.

Step S501, when a third service node of the multiple service nodes monitors that the communication address information of a fourth service node communicating with it is updated, the to-be-updated topology structure of the cluster is determined through the third service node.

Wherein, the communication address information of the fourth service node may include, for example, the extranet IP address and/or the intranet IP address of the fourth service node.

Step S503, propagating the to-be-updated topology structure to other service nodes of the multiple service nodes through the third service node.

Wherein, the updated communication address information of the fourth service node may also be propagated to other service nodes of the multiple service nodes through the third service node; wherein, the updated communication address information of the fourth service node may include at least one of the fourth extranet IP address and the fourth intranet IP address of the fourth service node.

Step S505, persisting the to-be-updated topology structure of the cluster.

Wherein, the to-be-updated topology structure of the cluster can be persisted in the node configuration file, or the updated communication address information of the fourth service node can be persisted in the node configuration file.

In some embodiments, cluster topology management is performed based on the extranet IP address and the intranet IP address bound to each service node in the multiple service nodes, comprising: when sending an operation and maintenance instruction to the fifth service node of the multiple service nodes through the client node, returning the extranet IP address of the fifth service node to the client node.

Further, in some embodiments, the operation and maintenance instruction includes a topology structure acquisition instruction. Based on this, the method for cluster communication also includes: when the return value of the topology structure acquisition instruction cannot be obtained from the fifth service node, re-initiating the topology structure acquisition instruction to the sixth service node of the multiple service nodes to receive the topology structure of the cluster returned by the sixth node.

The "fifth service node" can be considered as any node in the cluster that cannot return the topology structure; the "sixth service node" can be considered as any node in the cluster that can return the topology structure; the operation and maintenance instructions can be, for example, instructions such as adding, deleting, modifying, and querying, and can also be topology structure acquisition instructions (such as cluster nodes instructions). This embodiment provides a cluster topology management solution when a topology structure acquisition instruction is initiated to the cluster, that is, the topology structure of the cluster can be obtained for use through a node that can return the topology structure.

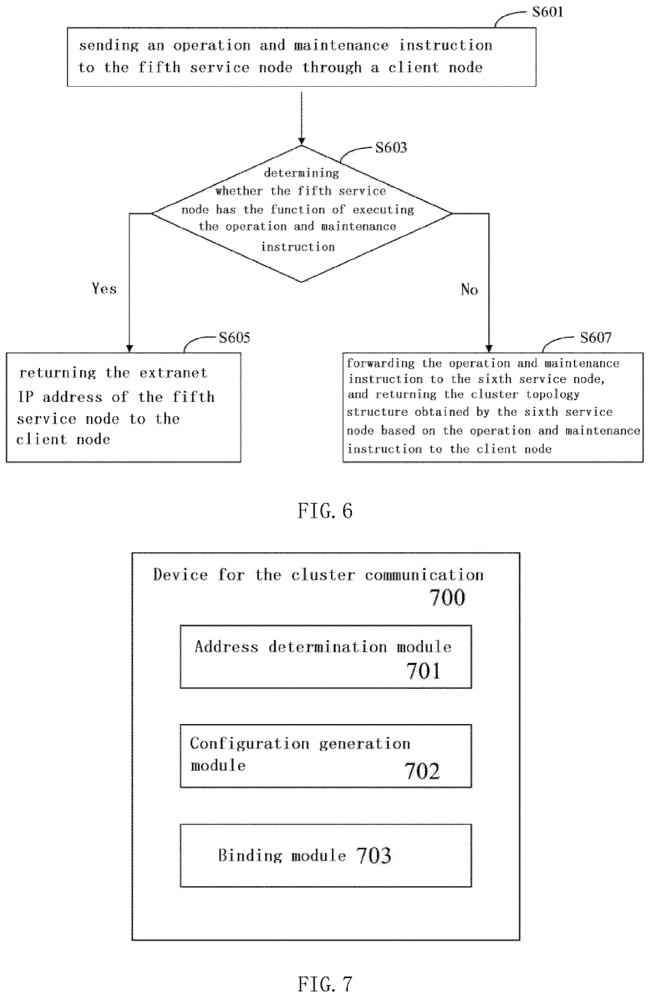

FIG. 6 shows a flowchart of a service node processing an operation and maintenance instruction in a method for cluster communication in an embodiment of the present disclosure, as shown in FIG. 6, including the following steps.

Step S601, sending an operation and maintenance instruction to the fifth service node through a client node.

Step S603, determining whether the fifth service node has the function of executing the operation and maintenance instruction; if so, executing step S605; if not, executing step S607.

Step S605, returning the extranet IP address of the fifth service node to the client node.

Step S607, forwarding the operation and maintenance instruction to the sixth service node, and returning the cluster topology structure obtained by the sixth service node based on the operation and maintenance instruction to the client node, wherein, the sixth service node may be any node in the cluster that can return a topology structure.

It should be noted that the above figures are only schematic illustrations of the processes included in the method according to the exemplary embodiment of the present disclosure, and are not for limitation. It is easy to understand that the processes shown in the above figures do not indicate or limit the time sequence of these processes. In addition, it is also easy to understand that these processes can be performed synchronously or asynchronously in multiple modules, for example.

FIG.7 shows a block diagram of an apparatus 700 for cluster communication according to an embodiment of the present disclosure, wherein the cluster may include a client node, multiple service nodes, and a management node; as shown in FIG.7, the apparatus 700 for cluster communication includes:
An address determination module 701 for determining the extranet IP address of the to-be-configured service node of the multiple service nodes according to the first private cloud network where the client node is located; the address determination module 701 further for determining the intranet IP address of the to-be-configured service node according to the second private cloud network where the management node is located; a configuration generation module 702 for generating configuration information based on the extranet IP address and the intranet IP address; a binding module 703 for binding the to-be-configured service node respectively with the extranet IP address in the first private cloud network and the intranet IP address in the second private cloud network according to the configuration information, so that the to-be-configured service node communicates with the client node through the first private cloud network, and the to-be-configured service node communicates with the management node through the second private cloud network.

By the apparatus for cluster communication provided by the present disclosure, the service node in the cluster can be bound to the first private cloud network where the client is located and the second private cloud network where the management node is located at the same time, so that the service node can communicate with the client node through the first private cloud network on the one hand, and communicate with the management node through the second private cloud network on the other hand, which can not only ensure the normal communication between the client node, multiple service nodes and management nodes in the same cluster, but also achieve the security and privacy of data isolation in communication.

In some embodiments, the apparatus for cluster communication also includes a listening module 704 for: determining the intranet IP address bound to each service node and management node in the cluster in the second private cloud network, and determining the port number of each service node and management node; determining the to-be-listened intranet port according to the intranet IP address and the port number; listening the internal communication data of the cluster based on the to-be-listened intranet port.

In some embodiments, the listening module 704 is also used for: determining the extranet IP addresses bound to each service node and client node in the cluster in the first private cloud network, and determining the port numbers of each service node and management node; determining the to-be-listened extranet port based on the extranet IP address and the port number; listening the external communication data of the cluster based on the to-be-listened extranet port.

In some embodiments, the apparatus for cluster communication also includes a communication module 705 for: when the first service node of the multiple service nodes sends a message to other service nodes in the cluster, constructing a message header of the message according to the first intranet IP address and the first extranet IP address of the first service node.

In some embodiments, the communication module 705 constructs a message header of the message based on the first intranet IP address and the first extranet IP address of the first service node, including: determining the value of the my_ip field of the node in the message header of the message based on the first intranet IP address, and adding the extranet ip field and the value of the extranet ip field to the message header based on the first extranet IP address; constructing the message header based on the value of the my_ip field and the value of the extranet ip field; or, determining the value of the my_ip field of the node in the message header of the message based on the first extranet IP address, and adding the intranet ip field and the value of the intranet ip field to the message header based on the first intranet IP address; constructing the message header based on the value of the my_ip field and the value of the intranet ip field.

In some embodiments, the apparatus for cluster communication further includes a topology management module 706 for: performing cluster topology management based on the extranet IP address and the intranet IP address bound to each service node of the multiple service nodes.

In some embodiments, the topology management module 706 performs cluster topology management based on the extranet IP address and the intranet IP address bound to each service node of the multiple service nodes, including: when a node adding instruction for a newly added service node is initiated to the second service node of the multiple service nodes through the client node, parsing the node adding instruction by the second service node to obtain the communication address information of the newly added service node; generating a propagation message by the second service node based on the communication address information of the newly added service node, and propagating the propagation message to other service nodes of the multiple service nodes.

In some embodiments, the topology management module 706 performs cluster topology management based on the extranet IP address and the intranet IP address bound to each service node of the multiple service nodes, comprising: when a third service node in the multiple service nodes monitors that the communication address information of the fourth service node communicating with it is updated, determining the to-be-updated topology structure of the cluster by the third service node, and propagating the to-be-updated topology structure to other service nodes of the multiple service nodes.

In some embodiments, the topology management module 706 is further used to persist the communication address information of the newly added service node or the updated communication address information of the fourth service node into the node configuration file.

In some embodiments, the topology management module 706 performs cluster topology management based on the extranet IP address and the intranet IP address bound to each service node of the multiple service nodes, comprising: when sending an operation and maintenance instruction to the fifth service node of the multiple service nodes through the client node, returning the extranet IP address of the fifth service node to the client node.

In some embodiments, the topology management module 706 is also used to: when the fifth service node lacks the function of executing the operation and maintenance instruction, determine the sixth service node with the function of executing the operation and maintenance instruction; forward the operation and maintenance instruction to the sixth service node, and return the extranet IP address of the sixth service node to the client node.

In some embodiments, the configuration generation module 702 generates configuration information based on the extranet IP address and the intranet IP address, comprising: obtaining the binding bind configuration item of the to-be-configured service node; adding the extranet IP address and the intranet IP address in the bind configuration item.

In some embodiments, the apparatus for cluster communication also includes a state management module 707 which is used to set the field value of the dual network tag field to an open state.

The other contents of the embodiment of FIG. 7 can make reference to the other embodiments mentioned above.

Those of ordinary skill can understand that various aspects of the present disclosure can be implemented as systems, methods or program products. Therefore, various aspects of the present disclosure can be specifically implemented in the following forms, namely: a complete hardware implementation, a complete software implementation (including firmware, microcode, etc.), or a combination of hardware and software, which can be collectively referred to as "circuit", "module" or "system" herein.

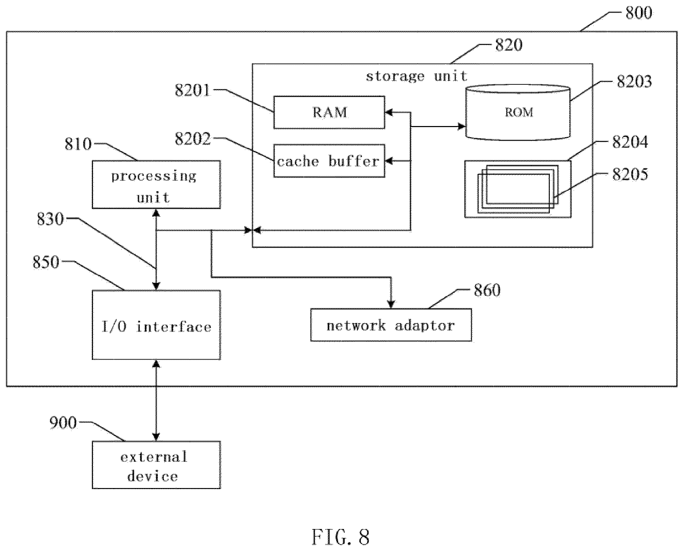

FIG. 8 shows a block diagram of a computer device for cluster communication in an embodiment of the present disclosure. It should be noted that the electronic device shown in the figure is only an example and should not bring any limitation to the function and scope of use of the embodiment of the present disclosure.

The electronic device 800 according to this embodiment of the present disclosure is described below with reference to FIG. 8. The electronic device 800 shown in FIG. 8 is only an example and should not bring any limitation to the function and scope of use of the embodiment of the present disclosure.

As shown in FIG. 8, the electronic device 800 is presented in the form of a general computing device. The components of the electronic device 800 may include, but are not limited to: the at least one above processing unit 810, the at least one above storage unit 820, and a bus 830 connecting different system components (including the storage unit 820 and the processing unit 810).

Wherein, the storage unit stores a program code, and the program code can be executed by the processing unit 810, so that the processing unit 810 performs the steps according to various exemplary embodiments of the present disclosure described in the above "Exemplary Method" section of this specification. For example, the processing unit 810 can execute the method shown in FIG. 2.

The storage unit 820 may include a readable medium in the form of a volatile storage unit, such as a random access storage unit (RAM) 8201 and/or a cache storage unit 8202, and may further include a read-only storage unit (ROM) 8203.

The storage unit 820 may also include a program/utility tool 8204 having a set (at least one) of program modules 8205, such program modules 8205 including but not limited to: an operating system, one or more application programs, other program modules, and program data, each or some combination of these examples may include the implementation of network environment.

The bus 830 may represent one or more of several types of bus structures, including a storage unit bus or a storage unit controller, a peripheral bus, a graphics acceleration port, a processing unit, or a local bus using any of a variety of bus structures.

The electronic device 800 may also communicate with one or more external devices 900 (e.g., a keyboard, a pointing device, a Bluetooth device, etc.), one or more devices that enable a user to interact with the electronic device 800, and/or any device that enables the electronic device 800 to communicate with one or more other computing devices (e.g., a router, a modem, etc.). Such communication may be performed via an input/output (I/O) interface 850. Furthermore, the electronic device 800 can also communicate with one or more networks (e.g., a local area network (LAN), a wide area network (WAN) and/or a public network, such as the Internet) via a network adapter 860. As illustrated, the network adapter 860 communicates with other modules of the electronic device 800 via a bus 830. It should be understood that, although not shown in the figure, other hardware and/or software modules can be used in conjunction with the electronic device 800, including but not limited to: microcode, a device driver, a redundant processing unit, an external disk drive array, a RAID system, a tape drive, and a data backup storage system, etc.

In an exemplary embodiment of the present disclosure, a computer-readable storage medium is also provided, on which a program product capable of implementing the above-mentioned method of the present specification is stored. In some possible implementations, various aspects of the present disclosure can also be implemented in the form of a program product, which includes a program code, and when the program product is run on a terminal device, the program code is used to enable the terminal device to perform the steps according to various exemplary embodiments of the present disclosure described in the above "Exemplary Method" section of the present specification.

According to the program product for implementing the above method in the embodiment of the present disclosure, it can adopt a portable compact disk read-only memory (CD-ROM) and include program code, and can be run on a terminal device, such as a personal computer. However, the program product of the present disclosure is not limited to this. In this document, a readable storage medium can be any tangible medium containing or storing a program, which can be used by or in combination with an instruction execution system, an apparatus or a device.

The program product can adopt any combination of one or more readable media. The readable medium can be a readable signal medium or a readable storage medium. The readable storage medium can be, for example, but not limited to, an electronic, magnetic, optical, electromagnetic, infrared, or semiconductor system, apparatus or device, or any combination thereof. More specific examples (a non-exhaustive list) of the readable storage media include: an electrical connection having one or more conductors, a portable disk, a hard disk, a random access memory (RAM), a read-only memory (ROM), an erasable programmable read-only memory (EPROM or flash memory), optical fibers, a portable compact disk-read-only memory (CD-ROM), an optical storage device, a magnetic storage device, or any suitable combination of the foregoing.

Computer-readable signal media may include data signals propagated in baseband or as part of a carrier wave, carrying readable program code. Such propagated data signals may take a variety of forms, including but not limited to electromagnetic signals, optical signals, or any suitable combination of the above. The readable signal media may also be any readable medium other than a readable storage medium that can send, propagate, or transmit programs for use by or in conjunction with an instruction execution system, an apparatus, or a device.

The program code contained on the readable medium may be transmitted using any appropriate medium, including but not limited to wireless, wired, optical cable, RF, etc., or any suitable combination of the foregoing.

The program code for performing operations of the present disclosure may be written in any combination of one or more programming languages, including object-oriented programming languages such as Java, C++, etc., and conventional procedural programming languages such as "C" language or similar programming languages. The program code may be executed entirely on a user computing device, partially on a user device, as a stand-alone software package, partially on a user computing device and partially on a remote computing device, or entirely on a remote computing device or server. In the case involving a remote computing device, the remote computing device may be connected to the user computing device through any type of network, including a local area network (LAN) or a wide area network (WAN), or may be connected to an external computing device (e.g., connect through the Internet using an Internet service provider).

It should be noted that although several modules or units of the device for action execution are mentioned in the above detailed description, this division is not mandatory. In fact, according to the embodiments of the present disclosure, the features and functions of two or more modules or units described above can be embodied in one module or unit. On the contrary, the features and functions of one module or unit described above can be further divided into multiple modules or units to be embodied.

In addition, although the respective steps of the method in the present disclosure are described in a specific order in the accompanying drawings, this does not require or imply that these steps must be performed in this specific order, or that all the steps shown must be performed to achieve the desired results. Additionally or alternatively, some steps can be omitted, multiple steps can be combined into one step for execution, and/or one step can be decomposed into multiple steps for execution, etc.

By the description of the above embodiments, it is easy for those of ordinary skill to understand that the exemplary embodiments described herein can be implemented by software or by software combined with necessary hardware. Therefore, the technical solution according to the embodiment of the present disclosure can be embodied in the form of a software product, which can be stored in a non-volatile storage medium (which can be a CD-ROM, a USB flash drive, a mobile hard disk, etc.) or on a network, and includes a number of instructions to enable a computing device (which can be a personal computer, a server, a mobile terminal, or a network device, etc.) to execute the method according to the implementation of the present disclosure.

According to one aspect of the present disclosure, a computer program product or computer program is provided, which includes computer instructions stored in a computer-readable storage medium. The processor of a computer device reads the computer instructions from the computer-readable storage medium, and the processor executes the computer instructions, so that the computer device executes the methods provided in various optional implementations of the above-mentioned embodiments.

Those of ordinary skill, after considering the specification and practicing the invention disclosed herein, will easily think of other embodiments of the present disclosure. The present disclosure is intended to cover any alteration, use or adaptive change of the present disclosure, which follows the general principles of the present disclosure and includes common knowledge or conventionally used technical means in the technical field not disclosed in the present disclosure. The specification and embodiments are to be regarded as exemplary only, and the true scope and spirit of the present disclosure are indicated by the appended claims.

## Claims

1. A method for cluster communication, wherein the cluster includes a client node, multiple service nodes and a management node, the method comprising:
determining, according to a first private cloud network where the client node is located, an extranet IP address of a to-be-configured service node of the multiple service nodes;
determining, according to a second private cloud network where the management node is located, an intranet IP address of the to-be-configured service node;
generating configuration information based on the extranet IP address and the intranet IP address;
binding the to-be-configured service node, according to the configuration information, respectively with the extranet IP address in the first private cloud network and the intranet IP address in the second private cloud network, so that the to-be-configured service node communicates with the client node through the first private cloud network and communicates with the management node through the second private cloud network.

2. The method according to claim 1, wherein, the method further comprises:
determining the intranet IP address bound to each service node and management node in the cluster in the second private cloud network, and determining a port number of each service node;
creating an intranet socket based on the intranet IP address and the port number;
using the intranet socket for listening to achieve internal communication within the cluster.

3. The method according to claim 1, wherein, the method further comprises:
determining the extranet IP address bound to each service node and the client node in the cluster in the first private cloud network, and determining the port number of each service node;
creating an extranet socket based on the extranet IP address and the port number;
using the extranet socket for listening to achieve external communication between the service nodes and the client nodes in the cluster.

4. The method according to claim 1, wherein, the method further comprises:
when a first service node of the multiple service nodes sends a message to other service nodes in the cluster, constructing a message header of the message according to the first intranet IP address and the first extranet IP address of the first service node.

5. The method according to claim 1, wherein, the method further comprises:
performing cluster topology management based on the extranet IP address and the intranet IP address bound to each of the multiple service nodes.

6. The method according to claim 5, wherein the cluster topology management is performed based on the extranet IP address and the intranet IP address bound to each of the multiple service nodes, comprising:
when a node adding instruction for a newly added service node is initiated to the second service node of the multiple service nodes through the management node, parsing the node adding instruction through the second service node to obtain the communication address information of the newly added service node;
generating a propagation message through the second service node based on the communication address information of the newly added service node, and propagating the propagation message to other service nodes of the multiple service nodes.

7. The method according to claim 5, wherein the cluster topology management is performed based on the extranet IP address and the intranet IP address bound to each of the multiple service nodes, comprising:
when a third service node of the multiple service nodes monitors that the communication address information of a fourth service node communicating with it is updated, determining a to-be-updated topology structure of the cluster through the third service node, and propagating the to-be-updated topology structure to other service nodes of the multiple service nodes.

8. The method according to claim 6 or 7, wherein the method further comprises:
persisting the communication address information of the newly added service node or the to-be-updated topology structure of the cluster.

9. The method according to claim 5, wherein the cluster topology management is performed based on the extranet IP address and the intranet IP address bound to each of the multiple service nodes, comprising:
when an operation and maintenance instruction is sent to a fifth service node of the multiple service nodes through the client node, returning the extranet IP address of the fifth service node to the client node.

10. The method according to claim 9, wherein the operation and maintenance instruction includes a topology structure acquisition instruction; wherein the method further comprises:
when a return value of the topology structure acquisition instruction cannot be obtained from the fifth service node, re-initiating the topology structure acquisition instruction to a sixth service node of the multiple service nodes to receive the topology structure of the cluster returned by the sixth node.

11. The method according to claim 1, wherein the method further comprises: setting the field value of the dual network tag field to an open state.

12. An apparatus for cluster communication, wherein the cluster includes a client node, multiple service nodes and a management node, the apparatus for cluster communication comprising:
an address determination module for determining an extranet IP address of a to-be-configured service node of the multiple service nodes according to a first private cloud network where the client node is located;
the address determination module further for determining an intranet IP address of the to-be-configured service node according to a second private cloud network where the management node is located;
a configuration generation module for generating configuration information based on the extranet IP address and the intranet IP address;
a binding module for binding the to-be-configured service node respectively with the extranet IP address in the first private cloud network and the intranet IP address in the second private cloud network according to the configuration information, so that the to-be-configured service node communicates with the client node through the first private cloud network and communicates with the management node through the second private cloud network.

13. A computer-readable storage medium having a computer program stored thereon, which, when executed by a processor, implements the method for cluster communication according to any of claims 1 to 11.

14. An electronic device, comprising:
one or more processors;
a storage means for storing one or more programs,
the one or more programs, when executed by the one or more processors, cause the one or more processors to implement the method for cluster communication according to any of claims 1 to 11.
